# EUROPEAN PATENT SPECIFICATION

(11) **EP 2 898 653 B1**
(45) Date of publication and mention of the grant of the patent: **20.07.2016**
(21) Application number: 12766041.3
(22) Date of filing: 19.09.2012
(51) Int. Cl.: H04L 29/08, H04L 12/24, H04L 29/06, H04L 12/26, H04L 12/14

(54) **METHOD AND NODE FOR CONTROLLING RESOURCES FOR A MEDIA SERVICE AS WELL AS A CORRESPONDING SYSTEM AND COMPUTER PROGRAM**
VERFAHREN UND KNOTEN ZUR STEUERUNG DER RESSOURCEN FÜR EINEN MEDIENDIENST SOWIE ENTSPRECHENDES SYSTEM UND COMPUTERPROGRAMM
PROCÉDÉ ET NOEUD POUR CONTROLER DES RESSOURCES POUR UN SERVICE MULTIMÉDIA, AINSI QUE SYSTÈME ET PROGRAMME INFORMATIQUE CORRESPONDANTS

(43) Date of publication of application: 29.07.2015
(73) Proprietor: Telefonaktiebolaget LM Ericsson (publ), 164 83 Stockholm (SE)
(72) Inventor: WOODS, John, E-28010 Madrid (ES); MARTIN CABELLO, Irene, E-28017 Madrid (ES); MUNOZ DE LA TORRE ALONSO, Miguel Angel, E-28002 Madrid (ES)
(74) Representative: Hoffmann Eitle
(86) International application number: PCT/EP2012/068425
(87) International publication number: WO 2014/044304

(56) References cited:
- US-A1- 2010 217 877
- US-A1- 2012 060 198
- US-A1- 2012 087 262
- "3rd Generation Partnership Project; Technical Specification Group Services and System Aspects; Policy and charging control architecture (Release 11), 3GPP TS 23.203 V11.2.0", , 12 June 2011 (2011-06-12), pages 1-140, XP055023827, Retrieved from the Internet: URL:http://www.3gpp.org/ftp/Specs/archive/ 23_series/23.203/23203-b20.zip [retrieved on 2012-04-04] cited in the application

## Description

### TECHNICAL FIELD

The present invention relates to a method and a node for controlling resources for a media service in a policy and charging system of a communication network as well as to a corresponding system and computer program, and in particular to a method for controlling resources for a media service carried out by a network node including a policy and charging rules function obtaining information from another node including a policy and charging enforcement function and/or traffic detection function.

### BACKGROUND

In communication networks, such as telecommunication networks, a call or a service often involves, on the one hand, a control plane or signalling plane and, on the other hand, a user plane or media plane. The control plane or signalling plane is in charge of establishing and managing a connection between two points of the network. The user plane or media plane is in charge of transporting user data or service data.

Network operators have the desire to define and enforce a set of rules in the network. A set of rules constitutes policies. A policy framework for managing and enforcing these policies usually includes at least three elements or functions: a policy repository for storing policy rules, which may be user-specific, a policy decision element or function and a policy enforcement element or function. The purpose of a policy framework includes controlling subscriber access to networks and services as well as the kind of access, i.e. its characteristics.

A policy framework notably addresses the decisions as to whether the subscriber is entitled, or authorized, to enjoy a service, and whether the network can provide the service to the subscriber, and particularly whether the network can provide the service to the subscriber with the desired Quality of Service (QoS).

Policy and charging control architectures, such as, but not limited to, the architecture described in 3GPP TS 23.203 version 11.1.0 (2011-03), Technical Specification Group Services and System Aspects; Policy and charging control architecture (release 11) (available on http://www.3gpp.org/ftp/Specs/2011-03/Rel-11/23_series/), integrate policy and charging control.

One aim of a policy framework is to set up and enforce rules dependent on subscribers and/or desired services to ensure efficient usage of network resources among all subscribers.

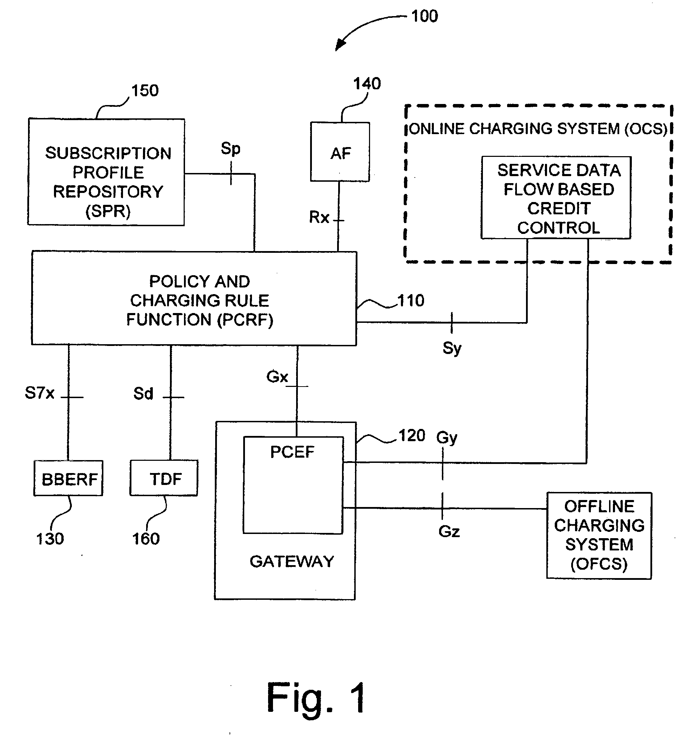

An architecture that supports Policy and Charging Control (PCC) functionality is depicted in Figure 1 which is taken from 3GPP TS 23.203 specifying the PCC functionality for Evolved 3GPP Packet Switched domain including both 3GPP accesses and Non-3GPP accesses. The Policy and Charging Rules Function (PCRF) 110 is a functional element that encompasses policy control decision and flow based charging control functionalities. The PCRF provides network control regarding Service Data Flow (SDF) detection, gating, QoS and flow based charging (except credit management) towards the Policy and Charging Enforcement Function (PCEF) 120. The PCRF receives session and media related information from the Application Function (AF) 140 and informs the AF of traffic plane events. The PCRF 110 is also coupled to a Subscriber Profile Repository (SPR) 150.

The PCRF shall provision PCC Rules to the PCEF via the Gx reference point and may provision QoS Rules to the Bearer Binding and Event Reporting Function (BBERF) 130 via the S7x reference point.

In the architecture 100 of Figure 1, the PCRF shall inform the PCEF through the use of PCC Rules on the treatment of each service data flow that is under PCC control, in accordance with the PCRF policy decision(s). This figure is taken from TS 23.203, which specifies the PCC functionality for Evolved 3GPP packet-switched domain, including both 3GPP accesses (GERAN/UTRAN/E-UTRAN) and Non-3GPP accesses.

The Gx reference point is defined in 3GPP TS 29.212 "Policy and charging control over Gx reference point", and lies between the PCRF and the PCEF. The Gx reference point is used for provisioning and removal of PCC Rules from the PCRF to the PCEF and the transmission of traffic plane events from the PCEF to the PCRF. The Gx reference point can be used for charging control, policy control or both.

The Rx reference point is defined in 3GPP TS 29.214 "Policy and charging control over Rx reference point" and is used to exchange application level session information between the PCRF and the AF. An example of a PCRF is the Ericsson Service-Aware Policy Controller (SAPC), see for example F. Castro et al., "SAPC: Ericsson's Convergent Policy Controller", Ericsson review No. 1, 2010, pp. 4 - 9. An example of an AF is the IP Multi-Media Subsystem (IMS) Proxy Call Session Control Function (P-CSCF).

The Sd reference point in Figure 1 may have a similar behaviour to the Rx reference point, which is seen in the following in which a similar functionality can be provided for the AF 140 and TDF 160.

Both Gx and Rx reference points may be based on Diameter, see for example P. Calhoun et al., "RFC 3588': Diameter Based Protocol", IETF, September 2003.

The PCEF enforces policy decisions received from the PCRF and also provides the PCRF with user-and access-specific information over the Gx reference point. The node including the PCEF or another Bearer Binding Function (BBF) encompasses SDF detection based on filter definitions included in the PCC Rules, as well as online and offline charging interactions (not described here) and policy enforcement. Since the PCEF is usually the one handling bearers, it is where the QoS is being enforced for the bearer according to the QoS information coming from the PCRF. This functional entity, i.e. the PCEF, is located at the Gateway, e.g. in the Gateway GPRS Support Node (GGSN), in the GPRS case. For all the cases where there is Proxy Mobile IP (PMIP) or Dual-Stack Mobile IP (DSMIP) in the core network, the bearer control is performed in the BBERF instead.

The Application Function (AF) 140 is an element offering applications in which service is delivered in a different layer, e.g. transport layer, from the one the service has been requested, e.g. signalling layer. One example of a network node including an AF 140 is the P-CSCF (Proxy-Call Session Control Function) of the IP multi-media (IM) core network (CN) sub-system. The AF 140 may communicate with the PCEF 110 to transfer dynamic session information, i.e. description of multi-media to be delivered in the transport layer. This communication is performed using the above-described Rx interface or Rx reference point, which is placed between the PCEF 110 and AF 140. Information in the Rx interface may be derived from the session information or service session information in the P-CSCF and it mainly includes what is called media components. Another example of a network node including an AF 140 is a streaming server.

Upon reception of the PCC/QoS rules from the PCRF, a Bearer Binding Function (BBF), either the PCEF 120 or the BBERF 130 depending on the deployment scenario, performs the bearer binding, i.e. associates the provided rule to an IP-CAN bearer within an IP-CAN (Internet Protocol Connectivity Access Network) session. The BBF will use the QoS parameters provided by the PCRF to create the bearer binding for the rule.

Next, PCC support to applications is described. When an application requires dynamic policy and/or charging control over the IP-CAN user plane to start a service session, the AF will communicate with the PCRF to transfer the dynamic session information required for the PCRF to take the appropriate actions on the IP-CAN network. The PCRF will authorize the session information, create the corresponding PCC/QoS rules and install them in the PCEF/BBERF. The PCEF/BBERF will encompass SDF detection, policy enforcement (gate and QoS enforcement) and flow based charging functionalities. As described, the applicable bearer will be initiated/modified and if required, resources will be reserved for that application.

The Traffic Detection Function (TDF) 160 is a functional entity that performs application detection and reporting of detected application or service and its service data flow description to the PCRF. The TDF can act in solicited mode, i.e. upon request from the PCRF, or unsolicited mode, i.e. without any request from the PCRF.

Next, PCC support for service awareness functionality is described. 3GPP release 11 has introduced a new entity in the PCC architecture, namely the above-mentioned TDF, that is a Deep Packet Inspection (DPI) box that monitors the payload and detects when an application is initiated/terminated. This functionality can also reside in the PCEF. In detail, DPI technology supports packet inspection and service classification, which consists of IP-packets classified according to a configured tree of rules so that they are assigned to a particular service session. DPI has been standardized in 3GPP release 11, the mentioned so-called traffic detection function (TDF), which can be either standalone or collocated with the PCEF which is discussed in detail in 3GPP TR 23.813. The reference point (Sd) has been defined between the stand-alone TDF and the PCRF.

Due to exponential growth in usage in mobile broadband networks, operators are very interested in offering subscriber packages which optimize the network resources without affecting the customer experience. Thereby, one approach could be to create rules that enforce certain policies decided by the PCRF to control network resources.

Multi-media related services (in the following called media services), and especially video and/or audio streaming, are already and are forecasted to be the most demanded services during the coming years. Those media services are very demanding from a QoS perspective and specifically require a lot of bandwidth from the operator's network.

With respect to media services, there are big differences in the requirements of the terminals in terms of bandwidth. For example, a smartphone of the first generation with a small screen size may require much less bandwidth than a laptop with mobile communication capabilities. There is currently no mechanism defined in the 3GPP PCC architecture in order to deliver custom-tailored video content required for a terminal.

US 2012/0087262 A1 relates to a method, apparatus and system for detecting service data of a packet data connection. Since a standalone TDF is not able to identify the establishment of a packet data connection when GPRS tunneling protocol operates between the PCEF and the access network, a method is proposed in which a packet data connection for a user is established and a policy and/or charging server information is transmitted, wherein the information can comprise an indication of service data.

US 2012/0060198 A1 relates to a method and system for generating metrics representative of policy and charging control rules. This document describes general considerations when generating PCC rules and once a PCC rules analyzer analyzed a PCC rule to define a corresponding metric, this metric is transmitted to an analytic system.

US 2010/0217877 A1 relates to a method and system for enabling access policy and charging control. In particular, the document relates to enhanced service information for access policy and charging control, wherein a media stream management of a service session comprises obtaining identity address data and policy information as well as performing a media stream management control step.

It is thus desirable to provide methods, nodes, a system and a computer program to optimize resource allocation in a network.

### SUMMARY

A suitable method, node, a system and a computer program are defined in the independent claims. Advantageous embodiments are defined in the dependent claims.

In one embodiment, a method of controlling resources for a media service in a policy and charging system of a communication network comprises the steps of obtaining, at a network node, identification information for identifying at least one of a user and a user terminal; and determining at least one device parameter using said identification information. The device parameter is associated with a device selected to receive media data of said media service. Further, the method comprises selecting according to said at least one device parameter a policy which is to be applied for said media service. Accordingly, a policy can be selected depending on the device parameter, such as a device type or subscriber package, which takes into account the specific requirements and desires of a user operating a mobile terminal or other device that is capable of receiving mobile communication data directly or through a mobile terminal. As a result, since the network is aware of the device parameter, it is possible to deliver media content tailored, e.g. in terms of bandwidth, to the user.

In one embodiment, a node is provided for controlling resources for a media service in a policy and charging system of a communication network. The node comprises an ID obtainer configured to obtain identification information for identifying at least one of a user and a user terminal; a determiner configured to determine at least one device parameter using said identification information, which parameter is associated with a device selected to receive media data of said media service; and a policy selector configured to select according to said at least one device parameter a policy which is to be applied for said media service.

In another embodiment, a system is provided comprising the above-described elements of the node, namely the ID obtainer, the determiner, and the policy selector as well as a rule receiver and a policy enforcer.

In another embodiment, a computer program is provided which includes instructions configured, when executed on a data processor, to cause the data processor to carry out the above-described method.

Further, advantageous embodiments of the invention are disclosed in the dependent claims.

### BRIEF DESCRIPTION OF THE DRAWINGS

Figure 1 illustrates an exemplary PCC architecture to assist the reader in understanding an exemplary content, in which embodiments of the invention may be applied.
Figure 2 illustrates operations of a method for controlling resources of a network to be used for a media service according to an embodiment.
Figure 3 illustrates an exemplary flow diagram for explaining resource control according to an embodiment of the invention.
Figure 4 illustrates elements of a network node configured to control resources for a media service according to an embodiment.
Figure 5 illustrates elements of a system including the network node of figure 4.
Figure 6a illustrates a standalone TDF.
Figure 6b illustrates a TDF collocated with a PCEF.
Figure 7 illustrates an exemplary flow diagram for explaining an embodiment of the present invention in detail.
Figure 8 illustrates an exemplary structure of a network node that may be adopted in some embodiments of the invention.

### DESCRIPTION OF THE EMBODIMENTS

Further embodiments of the invention are described with reference to the figures. It is noted that the following description contains examples only and should not be construed as limiting the invention.

In the following, similar or same reference signs indicate similar or same elements or operations.

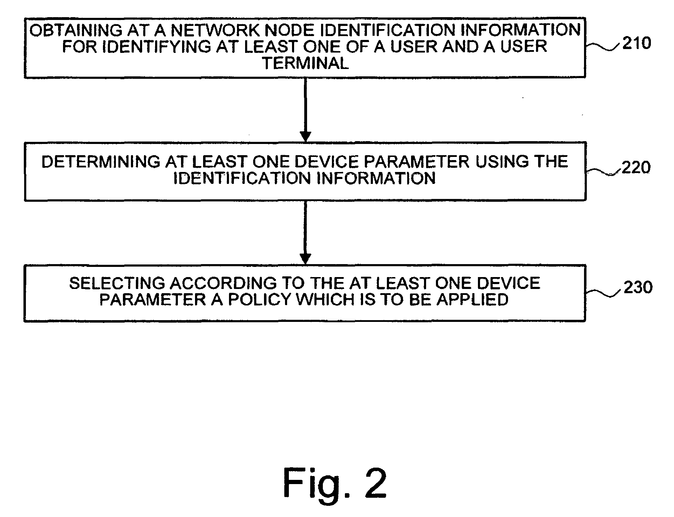

Figure 2 illustrates a flowchart of a method of controlling resources for a media service. The operations, also referred to steps in the following, of the method may be carried out by at least one node of a policy and charging system, preferably a node comprising the Policy and Charging Rules Function (PCRF). For assisting the reader in understanding embodiments of the invention, examples are described by referring to the previously described PCC architecture of figure 1, As mentioned above, the functions described in figure 1 are functional elements which may be placed in nodes of the policy and charging system and may be realized by suitable servers, routers, computers, a combination thereof, etc. as known in the art.

For example, the policy and charging system of the communication network comprises the above-mentioned node including the PCRF as well as a node including the above-mentioned Traffic Detection Function (TDF) collocated with a node including the above-mentioned Policy and Charging Enforcement Function (PCEF) or a standalone TDF.

As can be seen in figure 2, the method comprises a step 210 in which identification information for identifying at least one of a user and a user terminal is obtained at a network node, such as the network node including the PCRF. The User Terminal (UT) may be a terminal like a mobile phone or other User Equipment (UE), e.g. smartphone, tablet computer, laptop, Personal Digital Assistant (PDA), etc, The user and/or his/her terminal and/or subscription, e.g. with a network operator, can be determined by the International Mobile Equipment Identity (IMEI), International Mobile Subscriber Identity (IMSI) and/or Mobile Station Integrated Services Digital Network (MSISDN) identifier, which all constitute examples of identification information.

For example, at user session establishment, the TDF/PCEF node conveys to the PCRF node the subscriber identity, such as IMSI or MSISDN, as identification information for the user. Additionally or alternatively, user equipment information, such as the IMEI, may also be conveyed to the PCRF node providing identification information for identifying a user terminal. Surely, it is also possible to derive the subscriber identity from the user equipment information or vice versa, if a database is provided which maps user equipment information to a subscriber identity.

In step 220, a device parameter, such as a device type or subscriber package is determined using the identification information, e.g. IMEI, IMSI and/or MSISDN. The device type may indicate whether the device is a conventional mobile phone, smartphone, tablet computer or other device, such as a television. The subscriber package gives information about the user's subscription with the network provider, for example whether the user is allowed to receive multi-media content over IP and the associated bandwidth which can be allocated to him/her.

The device parameter is associated with the device which is selected to receive and reproduce media data of the media service requested by the user. The device may be the above-mentioned user terminal, in particular a mobile phone like known conventional mobile phones or smartphones, but is not limited thereto. For example, the device may also be any other media reproduction device that is connectable to the user terminal. In such a setup the user terminal would then act as a modem connecting to the mobile communication network and providing the media reproduction device with the desired media data. For example, the media reproduction device may be a high-definition (HD) television set with a large screen requiring a higher bandwidth for video reproduction and display than a conventional mobile phone.

Therefore, a subscription, i.e. subscription package, can relate to requirements for QoS, in particular bandwidth, which requirements may be different to the user terminal connected to the communication network and receiving the media data, since the terminal can also act as a modem for a flat screen device with HD resolution, for example. In the case, in which the user terminal acts as a modem, the bandwidth required by the user terminal would be higher than usually needed by the user terminal, since it has to provide the media data to the media reproduction device.

However, in most cases the user terminal receiving media data is also the same device reproducing the media data. The device parameter may be obtained by consulting a database in which identification information is associated with a device parameter, which will be explained in more detail further below.

Further, in step 230 a policy associated with a PCC or ADC rule(s) is selected according to the device parameter determined in step 220. The selected policy is then applied for the media service based on the subscriber package and/or device type so that a QoS can be selected to be applied for different devices. In detail, a PCC/ADC rule is generated associated with the policy and then provided to the PCEF node or TDF node.

Accordingly, network resources can be optimized and distributed according to different subscriber packages and/or devices used without affecting user experience. Additionally, the user may also be enabled to share a connection for multiple multi-media streams, in particular video streams, in parallel depending on the user's subscriber package at the network operator. For example, a base subscriber package would only allow one simultaneous video stream to protect network resources, and if a user desires to share the connection for multiple video streams, a different subscriber package may be obtained.

As mentioned above, the subscription may not be limited to the user terminal connected to the communication network but a subscription for high bandwidth can be obtained so that the user terminal may be used as a modem to be connected to a flat screen display with a much larger size.

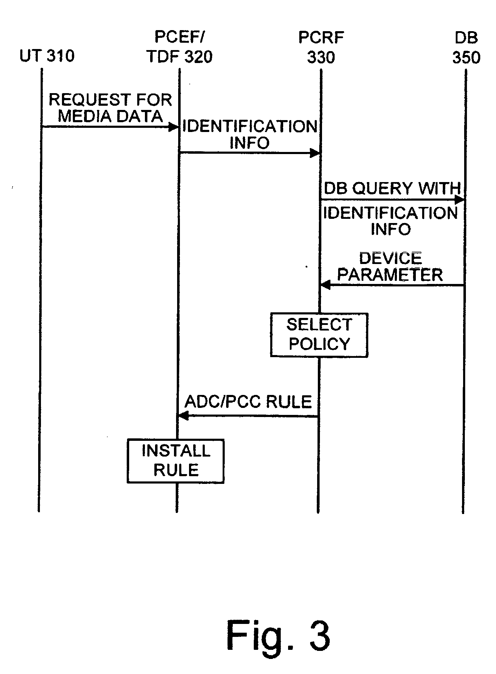

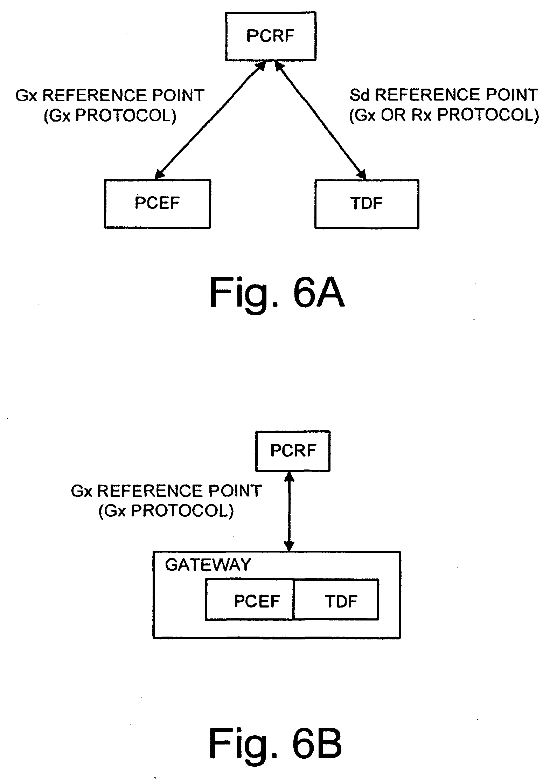

The example discussed with respect to fig. 2 above, will now be explained in more detail by referring to figure 3. Figure 3 is a flow diagram describing steps of a specific embodiment in detail by referring to a policy and charging system and user terminal. The policy and charging system comprises a PCRF node 330, a database 350 and the node 320 including a TDF collocated with a PCEF. The flow chart would be basically the same if instead of a TDF collocated with a PCEF a standalone TDF would be used, which will be described in more detail in figures 6A and 6B later.

As can be seen in figure 3 the user terminal 310 requests media data from the network. In general, such a request is usually forwarded to the application function (not shown in fig. 3), running on a server that is able to provide the requested media service to the user terminal. The detailed signalling is omitted for reasons of simplicity. Together with a request or separately, the user terminal 310 provides identification information to the network, preferably both subscriber identity information (IMSI or MSISDN) and user equipment information (IMEI).

This identification information is then forwarded from PCEF 320 to PCRF 330, as shown in figure 3. Based on the received identification information, PCRF retrieves the corresponding subscriber package from database 350, which usually corresponds to the Subscriber Profile Repository (SPR) 150 in figure 1.

For the case of video related subscriber packages, the retrieved video subscriber package can be at least one of the following: basic video package, tablet video package, laptop video package, HD video package, simultaneous video instances package. Based on the received identification information, in particular user equipment information, PCRF retrieves the device type from database 350 which may include a separate IMEI database. The retrieved device type is associated with a smartphone, tablet computer, laptop, etc., for example. Accordingly, one or more device parameters can be retrieved from a database such as an SPR, based on identification information so that the one or more determined device parameters can be used to select a policy or policies.

The subscriber package or device type, which are examples of the above described device parameters, are then forwarded from database 350 to PCRF 330, which selects according to at least one device parameter, e.g. the device type or subscriber package, a policy to be applied for the media service, such as video streaming. Accordingly, a device parameter may represent a device type for or associated with identification information identifying the user terminal and another device parameter may represent a subscriber package for or associated with identification information when this information can be used to identify a user.

In detail, depending on the subscriber package applicable for the user and /or the device type, the PCRF selects the appropriate policy and generates the appropriate PCC/ADC rule(s) to be applied for the media service, e.g. regarding which QoS is allowed and thus to be applied. For example, different QoS are to be applied for a smartphone having a screen size of 4" requiring a video bandwidth of approximately 0.4 Mbps, a tablet computer having a screen size of 10"requiring a video bandwidth of approximately 0.7 Mbps or a laptop computer having a screen size of 14" requiring a video bandwidth of approximately 1.5 Mbps.

As can be seen in figure 3, the generated rule associated with the selected policy is provided to the PCEF/TDF node 320 and can subsequently be installed at this node, so as enforce the policy at this node for a service session and preferably provide for charging and reporting at this node. The service session supported by the PCRF and PCEF provides then the media service from the AF to a user terminal (UT) taking into account the features set by the installed rule, e.g. allows certain features such as simultaneous video instances or not depending on the installed rule.

The skilled person understands that more than one rule can be generated based on different selected policies for one user, wherein the policy is selected depending on the device type and/or the subscriber package, thus represented by a first and/or second device parameter. Further, instead of or in addition to providing a rule associated with a selected policy to the PCEF/TDF 320, the device parameter may be provided to this node directly. For example, the device parameter, in particular, the device type may be included in a charging report which can be sent to an online charging and billing system or the PCRF. Therefore, in some cases it may be useful to pass the device parameter to the PCEF/TDF node in a proprietary Device-Type AVP (Attribute Value Pair), based on PCRF configured policies which may also depend on other retrieved information, e.g. user location or user roaming status.

The PCEF/TDF node 320, upon reception of the device parameter from the PCRF node, can use it for charging and/or reporting, by including the proprietary Device-Type in the following:
- Online charging: new proprietary Device-Type AVP in the Gy CCR (Credit Control Request) messages.
- Offline charging: new proprietary Device-Type field in the CDR (Charging Data Record) files.
- Reporting (DPI Probe, statistics): new proprietary Device-Type field in the reporting/statistics information.

During the user session, each time the user starts the media service, the TDF node including the DPI capabilities notifies to the PCRF node each individual video instance detected, for example in a new Instance-Id AVP. For example, when a user connects to a video server, e.g. HTTP based, and watches different videos either in parallel or in sequence in the same session (PDP context), the traffic for each video would be one service instance, here video service instance, whereas the service session comprises all traffic, i.e. different videos, between the UT and the video server during that connection. If the user closes the connection to the video server, e.g. closes a window, and connects again later, e.g. either keeping the general data connection or PDP context or by powering off the UT and powering it on again, another service session is created with other corresponding service instances. A service instance may simply be detected by URL hash by the TDF, i.e. each HTTP request/response transaction to a different URL is a different service instance, while all HTTP request/response transactions between the UT and video server for that connection correspond to the same service session.

In the following, examples of different policies are discussed. As mentioned above, the PCRF node selects the corresponding policy according to at least one device parameter. Preferably, the policy is selected according to two device parameters, namely the subscriber package and the device type.

For example, one policy may provide for the selection of a specific codec for a service instance so as to enable transcoding from one media format used by one node to another media format used by the media reproduction device, which is in most cases the same as the user terminal, as mentioned above. It is even possible that the PCRF provides a different codec to each service instance based on the subscription, e.g. high quality codec for the first video instance, and low quality codecs for subsequent video instances, in case the user uses them in parallel.

With a different subscription, there could be a case with no limitation on the codec quality and all instances use the high quality codec. As codecs several known codecs can be used, such as codecs supporting MPEG or HLS. This has the further advantage that a user terminal or media reproduction device does not have to support a large number of different codecs to be able to retrieve and view media data from different media video servers but if codec of a video server and codec of a user terminal should not correspond to each other, then the media format can be transcoded by the network, particularly by the TDF/PCEF node if it has transcoding capabilities. When the rule is provided to the PCEF/TDF node, it can be extended with codec information which constitutes a new enforcement action in PCC/ADC rules and details of new appropriately amended AVPs will be presented further below. Accordingly, the Gx interface can be enhanced with support of transcoding actions from the PCRF so that one format can be changed into another format.

A different policy provides for access control to allow a number of service instances to be established depending on the at least one device parameter. For example in a default case only a first service instance is allowed and in a case, in which the user subscribed to a subscriber package for simultaneous video instances, multiple service instances are allowed.

Another policy provides for adaptation of bandwidth for the first service instance or adaptation of bandwidth for additional service instances depending on the device parameter. In a simple example, the bandwidth may be adapted to the screen size of a device or not depending on both the device type and subscriber package. Accordingly, even if the device type indicates that a device with a large screen size and high resolution is used that usually requires a high bandwidth, the bandwidth could still be limited due to the user's subscriber package so as to prioritize other users with better, i.e. premium, subscriber packages when the overall bandwidth is limited.

In another example, in which the user has not subscribed to a subscriber package for simultaneous video instances, the bandwidth may be restricted for extra instances, while not restricting the bandwidth for the first instance.

A different policy may be related to a rating group selection to charge differently for each service instance.

Enforcing several other policies may be possible by implementing the above described functionality. In all cases, upon reception of a rule associated with the selected policy from the PCRF node, the PCEF/TDF node enforces the policy accordingly. While in figure 3 signalling in a network between a network node comprising a PCRF and another network node comprising a TDF/PCEF has been described, a similar signalling can be provided between a network node comprising the PCRF and another network node comprising an AF, which will be described in more detail further below.

The implementation of the above described functionality can be realized for an AF node with DPI capabilities, e.g. Ericsson's Service Aware Support Node (SASN), as part of a video enhancement feature. This may also impact on the PCRF, e.g. the SAPC which was discussed at the beginning of this document.

In the following different alternatives are proposed supporting the use cases described above. In detail, the idea of implementing an instance handling mechanism based on subscriber package and/or user terminal (device type) leads preferably to modification of the Gx, Sd and Rx interfaces to support passing codec information, device type, instance identifier, etc. to the PCEF/TDF/AF node, wherein the following three options will be discussed in detail below, namely a TDF collocated solution (Gx), standalone TDF solution (Sd) and AF based solution (Rx).

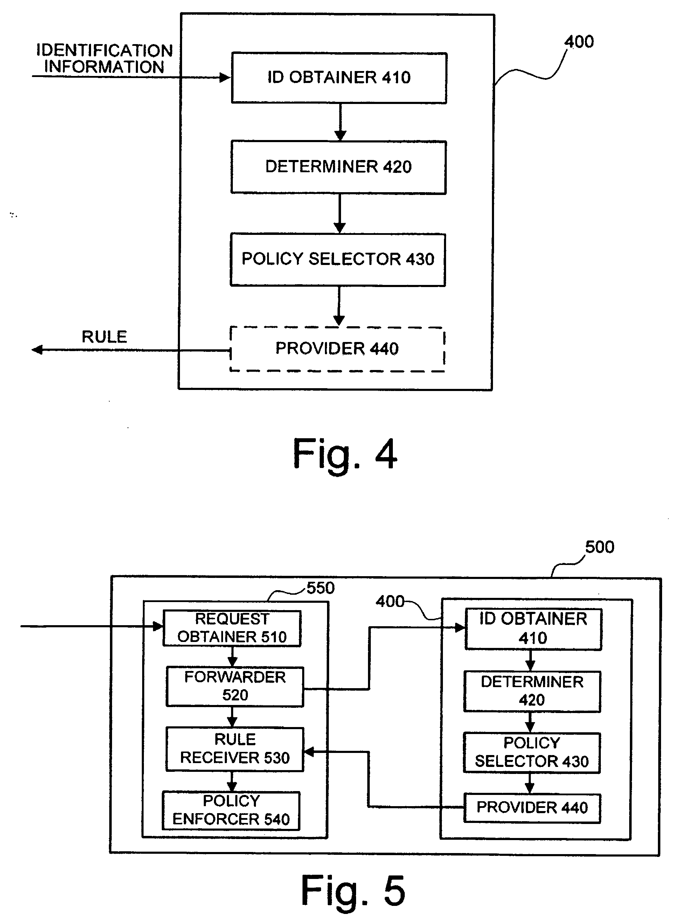

Before discussing implementation examples of these options in detail, it is referred to figures 4 and 5, which illustrate elements of a network node and element of a system including the network node, respectively.

In detail, figure 4 illustrates elements of a network node 400 configured to control resources for a media service in a policy and charging system of a communication network according to an embodiment. The network node 400 may be configured to implement a PCRF and thus may constitute or be included in the above described network node 330 or 110. The network node 400 may be a server comprising a processor to carry out at least some of the above described functions, specifically the functions described with respect to fig. 2. As can be seen in figure 4, the network node 400 comprises an ID obtainer 410, a determiner 420, a policy selector 430 and optionally a provider 440, which may be tangible elements or software functions running on a processor.

The ID obtainer 410 is configured to obtain identification information for identifying at least one of the user and a user terminal, whereas details about the identification information are provided above.

The determiner 420 is configured to determine at least one device parameter using the identification information, which parameter is associated with a device selected to receive media data of the media service. The device may be in the above described media reproduction device that can be the same device as the user terminal but is not limited thereto. Regarding the device parameter which is at least one of a subscriber package and device type, it is referred to the above explanation to avoid unnecessary repetition.

The policy selector 430 is configured to select, according to at least one device parameter, a policy which is to be applied for the media service. These described elements allow carrying out the functions previously described with respect to figure 2 and it is referred to the description of this figure and figure 3 for further details.

Fig. 4 also shows an optional provider 440, which is a rule provider configured to provide a rule associated with the selected policy to another node, such as a node including TDF, PCEF or AF. The rule is provided to the other node and installed at said other node so as to enforce the selected policy at said other node.

Accordingly, the same advantages which are achieved with the above described method can also be achieved by the network node 400.

The system shown in figure 5 comprises the network node 400 and its elements as well as the node 550. It is shown how the elements of node 400 interact with the elements of the other node 550, which may be a node that includes at least one of PCEF, TDF and AF. This other node 550 comprises, for example, a request obtainer 510, which receives a request from the UT to provide media data, and a forwarder 520, which forwards identification information obtained from the UT to the ID obtainer of node 400. Additionally, a rule receiver 530 may be provided, which is configured to receive a rule from node 400 associated with the policy selector in node 400. This rule can then be used by the policy enforcer 540 which is configured to enforce a policy at node 550. Accordingly, the system 500 includes basically two nodes namely node 400 and 550 which implement the above described functionality.

Similar to the network node 400, also the network node 550 may be a server comprising a processor to carry out at least some of the above described functions, in particular the functions described in fig. 3 with respect to PCEF/TDF 320.

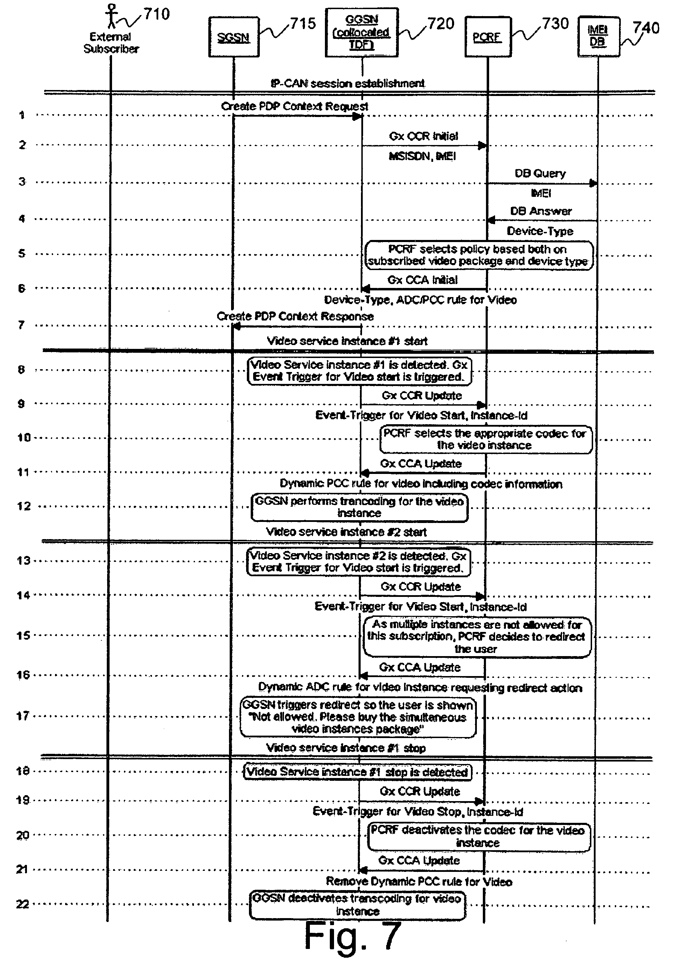

In the following the three options mentioned above, namely the TDF collocated solution, standalone TDF solution and AF based solution are described in detail with respect to figures 6A, 6B and 7.

The TDF collocated solution applies to 3GPP Rel11 compliant TDF node collocated with the PCEF node, e.g. PDN gateway (PGW) with DPI capabilities. An example of such a collocation is shown in figure 6B. In this example, the traffic detection function is included in the same node as the policy and charging enforcement function. As can be seen in figure 6B, there is only one reference point between the PCRF and the node combining the PCEF and TDF, which node may be a gateway. Accordingly, the different deployment scenarios of figures 6A and 6B differ in the type and the number of interfaces and thus the type and number of messages which have to be used for signalling.

The sequence depicted in figure 7 is carried out in this example between a subscriber, in particular his/her user terminal 710, the Serving GPRS Support Node (SGSN) 715, the Gateway GPRS Support Node (GGSN) 720 collocated with a TDF, the PCRF node 730 and the IMEI database (DB) 740. As can be seen in figure 7, figure 7 is a flow diagram describing the TDF collocated solution in detail. In this example, the user has subscribed to a high resolution video package but has not subscribed to the simultaneous video instances package.

As seen in point 2 of figure 7, after a session establishment and creation of a PDP context request, the PCEF/TDF node conveys to the PCRF node through 3GPP Rel11 Gx interface by using a Gx CCR (Credit Control Request) initial message both the subscriber identity (IMSI or MSISDN) and also the user equipment information (IMEI).

Once the PCRF node has received the appropriate identification information, it uses this information to retrieve the subscriber package, if available, and the device type from the external database 740.

Then, the PCRF node 730 selects a policy based on the subscriber package and the device type. Based on the above information and on PCRF configured policies, the PCRF node 730 conveys the proprietary Device-Type AVP, preferably including a codec, in the Gx CCA (Credit Control Answer) message to the node 720. Further, the appropriate ADC/PCC rules (both ADC rules and PCC rules are supported in collocated case) are generated and provided to the node 720, which is basically a PCEF/TDF node, in the Gx CCA initial message known from 3GPP release 11 so that the appropriate rule can be installed at node 720.

At a later stage, during the user session, each time the user starts the media service, the PCEF/TDF node 720 notifies the PCRF node 730 in a proprietary Instance-Id AVP in the Gx CCR update message about each individual video instance detected by means of a 3GPP release 11 service event trigger, including not only the service identifier, e.g. video streaming, but also the video instance identifier, e.g. Instance-Id = 1 (see point 9 in Fig. 7). This implies the support of both video instance detection and notification through Gx interface.

The PCRF node 730 dynamically selects, according to the subscriber package and user equipment information, the corresponding policy and sends a rule generated based on the policy in a Gx CCA update message (see point 11 in Fig. 7). In case the PCEF/TDF node has transcoding capabilities, the Dynamic PCC/ADC rules can be extended with codec information to provide a new Codec-Information AVP in Charging-Rule-Definition, as follows:

```
       Charging-Rule-Definition ::= < AVP Header: 1003 >
                                                   { Charging-Rule-Name }
                                                   [ Service-Identifier ]
                                                   [ Rating-Group ]
                                                  * [ Flow-Information ]
                                                   [ Flow-Status ]
                                                   [ QoS-Information ]
                                                   [ PS-to-CS-Session-Continuity ]
                                                   [ Reporting-Level ]
                                                   [ online ]
                                                   [ Offline ]
                                                   [ Metering-Method ]
                                                   [ Precedence ]
                                                   [ AF-Charging-Identifier ]
                                                  * [ Flows ]
                                                   [ Monitoring-Key]
                                                   [ AF-Signalling-Protocol ]
                                                   [ Sponsor-Identity ]
                                                   [Application-Service-Provider-Identity]
                                                   [ Codec-information ]
                                                  * [ AVP ]
```

As mentioned several times before, upon reception of the rule associated with the selected policy from the PCRF node 730, the PCEF/TDF node 720 enforces the policy accordingly.

The remaining sequence steps in Fig. 7 are basically self-explanatory. In short, points 13-17 are similar operations to the ones carried out in points 8-12 but this time not allowing a second service instance. In points 18-22 a stop of a service instance is detected and transcoding for a video instance is deactivated.

In the following, the standalone TDF solution is described. This solution applies to 3GPP release 11 compliant standalone TDF node which supports the Sd reference point with the PCRF. A schematic drawing of the set-up and functional relationships of the nodes is shown in Fig. 6a.

Similar to the explanation of the flow diagram of Fig. 7, also in this case, the PCRF node receives a subscriber identity (IMSI or MSISDN) and user equipment information (IMEI) from the PCEF node, e.g. PGW, after user session establishment, and will then create the Sd session towards the corresponding standalone TDF node.

As explained before, the PCRF retrieves the subscriber package, if available, and the device type from one or more external databases. Based on the above information and on PCRF configured policies, the PCRF node selects the appropriate ADC (Application Detection and Control) rules to be installed in the standalone TDF for the media service, in this example video service, in the 3GPP release 11 Sd SER message and conveys the proprietary Device-Type AVP in the 3GPP release 11 Sd SER message.

Later on during the user session, each time the user starts the video service, the standalone TDF node notifies the PCRF node in a proprietary Instance-Id AVP in the Sd CCR update message of each individual video instance detected by means of a 3GPP release 11 service event trigger, including not only the service identifier, e.g. video streaming, but also the video instance identifier, e.g. Instance-Id = 1. This implies the support of both video instance detection and notification through Sd reference point.

The PCRF node dynamically selects, according.to the subscriber package and the user equipment information, the corresponding policy and sends the associated rule in a Sd CCA update message. In case the standalone TDF node has transcoding capabilities, Dynamic ADC rules can be extended with codec information to provide the new Codec-Information AVP in ADC-Rule-Definition, as follows:

```
                            ADC-Rule-Definition :: = < AVP Header: 1094 >
                                                           { ADC-Rule-Name }
                                                           [ TDF-Application-Identifier ]
                                                           [ Flow-Status ]
                                                           [ QoS-Information ]
                                                           [ Monitoring-Key ]
                                                           [ Redirect-Information ]
                                                           [ Codec-Information ]
                                                          * [ AVP ]
```

Similar to the above-described examples, the standalone TDF node then enforces the policy accordingly after reception of the rule from the PCRF node.

In the following the AF based solution is described. This solution applies to an AF node with DPI capabilities, e.g. SASN, which supports the Rx interface with the PCRF.

Similar to the above, at or after user session establishment, the PCRF node receives the subscriber identity (IMSI or MSISDN) and also the user equipment information (IMEI) from the PCEF node, e.g. PGW. Further, the PCRF node retrieves the video subscriber package, if available, and the device type from external databases, for example. Based on the above information and on PCRF configured policies, the PCRF node conveys the proprietary Device-Type AVP to the PCEF/TDF node in the Gx CCA message.

Later on, during the user session, each time the user starts the video service, the AF node notifies the PCRF node in a proprietary Instance-Id AVP in the 3GPP Rx AAR message of each individual video instance detected, including not only the service identifier, e.g. AF-Application-Identifier set to video streaming, but also the video instance identifier, e.g. Instance-Id = 1. This implies the support of both video instance detection and notification through the Rx interface.

The PCRF node dynamically selects, according to the subscriber package and user equipment information, the corresponding policy typically towards the PCEF node, e.g. by installing PCC rules on the PGW, but this may also be done towards the AF node, e.g. SASN has also enforcement capabilities as it supports the Gx protocol. In case the AF node has transcoding capabilities, it is possible to extend the Rx protocol with codec information and to provide a new Codec-Information AVP in Rx AAA message, as follows:

```
                            <AA-Answer> ::= < Diameter Header: 265, PXY >
                                            < Session-Id >
                                            { Auth-Application-Id }
                                            { Origin-Hose }
                                            { Origin-Realm }
                                            [ Result-Code ]
                                            [ Experimental-Result ]
                                           * [ Access-Network-Charging-Identifier ]
                                            [ Access-Network-Charging-Address ]
                                            [ Acceptable-Service-Info ]
                                            [ IP-CAN-Type ]
                                            [ RAT-Type ]
                                           *[ Supported-Features ]
                                           *[ Class ]
                                            [ Error-Message ]
                                            [ Error-Reporting-Host ]
                                           * [ Failed-AVP ]
                                            [ Origin-State-Id ]
                                            * [ Redirect-Host ]
                                            [ Redirect-Host-Usage ]
                                            [ Redirect-Max-Cache-Time ]
                                           * [ Proxy-Info ]
                                            [ Codec-Information ]
                                           * [ AVP ]
```

The PCEF node then enforces, upon reception of the policy from the PCRF node, the policy accordingly. In case of SASN, a Rx AAA response message indicating service not authorized results in dropping the package for that particular video instance.

According to the above, operators are enabled to support the provision of specific subscriber packages adapted to the device parameter, such as the device type, in order to optimize the network resources while not affecting user experience. Further, operators are enabled to support the provision of instance handling, allowing offering subscriber packages for simultaneous video instances or other multi-media instances for premium users.

Additionally, the above schemes enable to include the device type in the charging (online/offline) and reporting information, which provides more flexibility for the operator when offering certain services or subscriber packages as well as enable to pass codec information through Gx, Rx and Sd interfaces.

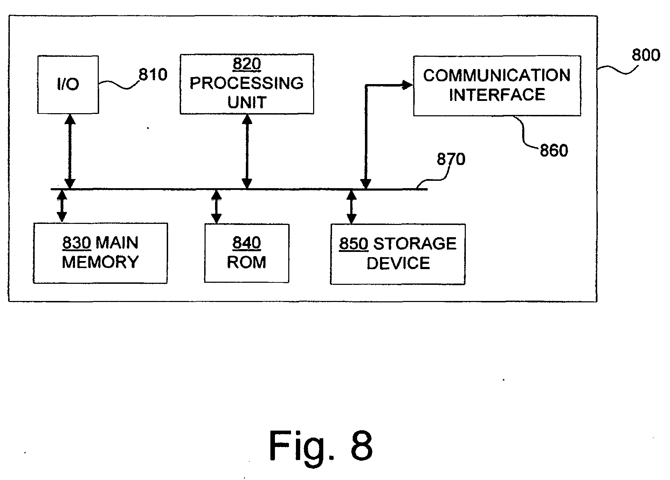

Fig. 8 is a schematic diagram of an exemplary implementation of a network node 800, which may for instance be a PCRF. As illustrated, network node 800 may include a bus 870, a processing unit 820, a main memory 830, a ROM 840, a storage device 850, an I/O interface 810 consisting of an input device and an output device, and a communication interface 860. Bus 870 may include a path that permits communication among the components of network device.

Processing unit 820 may include a processor, a microprocessor, or processing logic that may interpret and execute instructions. Main memory 830 may include a RAM or another type of dynamic storage device that may store information and instructions for execution by processing unit 820. For example, the determiner 420 and the policy selector 430 may be realized by the processing unit 820. ROM 840 may include a ROM device or another type of static storage device that may store static information and instructions for use by the processing unit. Storage device 850 may include a magnetic and/or optical recording medium and its corresponding drive.

The input device may include a mechanism that permits an operator to input information to network node 800, such as a keyboard, a mouse, a pen, voice recognition and/or biometric mechanisms, etc. Output device may include a mechanism that outputs information to the operator, including a display, a printer, a speaker, etc. Communication interface 860 may include any transceiver-like mechanism that enables network node 800 to communicate with other devices and/or systems. For example, communication interface 860 may include mechanisms for communicating with another device or system via a network, such as a communication network. In the above examples, the ID obtainer 410 may be realized by the communication interface 860.

Network node 800 may perform certain operations or processes described herein. Network node 800 may perform these operations in response to processing unit executing software instructions contained in a computer-readable medium, such as main memory 830, ROM 840, and/or storage device 850. A computer-readable medium may be defined as a physical or a logical memory device. For example, a logical memory device may include memory space within a single physical memory device or distributed across multiple physical memory devices. Each of the main memory, ROM and storage device may include computer-readable media with instructions as program code. The magnetic and/or optical recording media (e.g., readable CDs or DVDs) of the storage device may also include computer-readable media. The software instructions may be read into the main memory from another computer-readable medium, such as storage device 850, or from another device via communication interface 860.

The software instructions contained in main memory 830 may cause processing unit 820 including a data processor, when executed on the processing unit, to cause the data processor to perform operations or processes described herein. Alternatively, hardwired circuitry may be used in place of or in combination with software instructions to implement processes and/or operations described herein. Thus, implementations described herein are not limited to any specific combination of hardware and software.

The physical entities according to the different embodiments of the invention, including the elements, nodes and systems, may comprise or store computer programs including software instructions such that, when the computer programs are executed on the physical entities, steps and operations according to the embodiments of the invention are carried out, i.e. cause data processing means to carry out the operations. In particular, embodiments of the invention also relate to computer programs for carrying out the operations/steps according to the embodiments of the invention, and to any computer-readable medium storing the computer programs for carrying out the above-mentioned methods.

Where the terms obtainer, determiner, selector, forwarder, receiver, provider and enforcer are used, no restriction is made regarding how distributed these elements may be and regarding how gathered these elements may be. That is, the constituent elements of the nodes and systems may be distributed in different software and hardware components or other devices for bringing about the intended function. A plurality of distinct elements may also be gathered for providing the intended functionalities. For example, the elements/functions of the node may be realized by a microprocessor and a memory similar to Fig. 8, wherein the microprocessor may be programmed such that the above-mentioned operation, which may be stored as instructions in the memory, are carried out.

Further, the elements of the nodes or systems may be implemented in hardware, software, Field Programmable Gate Arrays (FPGAs), Application Specific Integrated Circuits (ASICs), firmware or the like.

It will be apparent to those skilled in the art that various modifications and variations can be made in the entities and methods of this invention as well as in the construction of this invention without departing from the scope of spirit of the invention.

The invention has been described in relation to particular embodiments and examples which are intended in all aspects to be illustrative rather than restrictive. Those skilled in the art will appreciate that many different combinations of hardware, software and/or firmware will be suitable for practising the present invention.

Moreover, other implementations of the invention will be apparent to those skilled in the art from consideration of the specification and practice of the invention disclosed herein. It is intended that the specification and the examples be considered as exemplary only, wherein abbreviations used in the above examples are listed below. To this end, it is to be understood that inventive aspects lie in less than all features of a single foregoing disclosed implementation or configuration. Thus, the true scope of the invention is indicated by the following claims.

### Abbreviations

- 3GPP: Third Generation Partnership Project
- AF: Application Function
- AVP: Attribute Value Pair
- BW: Bandwidth
- CCA: Credit Control Answer
- CCR: Credit Control Request
- DPI: Deep Packet Inspection
- GGSN: GPRS Gateway Support Node
- HD: High Definition
- IMEI: International Mobile Equipment Identity
- IMSI: International Mobile Subscriber Identity
- IP: Internet Protocol
- IP-CAN: Internet Protocol Connectivity Access Network
- MSISDN: Mobile Station Integrated Services Digital Network
- MSP: Multi Services Proxy
- PCC: Policy and Charging Control
- PCEF: Policy and Charging Enforcement Function
- PCRF: Policy and Charging Rules Function
- PDN GW: Packet Data Network Gateway
- PDP: Packet Data Protocol
- QoS: Quality of Service
- RAA: Re-Authorization Answer
- RAR: Re- Authorization Request
- SAPC: Service Aware Policy Controller
- SASN: Service Aware Support Node
- SER: Session Establishment Request
- SEA: Session Establishment Answer
- SPR: Subscriber Profile Repository
- TDF: Traffic Detection Function

## Claims

1. Method of controlling resources for a media service in a policy and charging system of a communication network, comprising the steps of
obtaining, at a network node (110), identification information for identifying at least one of a user and a user terminal;
determining at least one device parameter using said identification information, which parameter is associated with a device selected to receive media data of said media service; and
selecting, according to said at least one device parameter, a policy which is to be applied for said media service,
wherein said at least one device parameter represents a device type for identification information identifying a user terminal, and
the method further comprising the step of providing a rule associated with said policy to another node (120, 140, 160) to be installed at said other node so as to enforce said policy at said other node for a service session and/or to provide for charging and reporting at said other node, and the step of
providing the at least one device parameter to said other node (120, 140, 160) in a Device-Type Attribute Value Pair.

2. Method of claim 1, wherein the step of determining said at least one device parameter comprises retrieving from a database (150) based on said identification information said at least one device parameter.

3. Method of claim 1, wherein said policy is selected depending on both said device type represented by a first device parameter and a subscriber package for identification information identifying a user represented by a second device parameter.

4. Method of one of claims 1 to 3, wherein said selected policy provides for the selection of a specific codec for a service instance so as to enable transcoding from one media format used by one node to another media format to be used by said device.

5. Method of one of claims 1 to 4, wherein said selected policy provides for access control to allow a number of service instances to be established depending on said at least one device parameter.

6. Method of one of claims 1 to 5, wherein said selected policy provides for adaptation of bandwidth for the first service instance or additional service instances depending on said at least one device parameter.

7. Method of one of claims 1 to 6, wherein said device is a user terminal, in particular a mobile phone, of the user or a media reproduction device connectable to the user terminal.

8. Method of one of claims 1 to 7, wherein said node comprises a policy and charging rules function, PCRF, and/or said other node comprises an application function or traffic detection function.

9. Node for controlling resources for a media service in a policy and charging system of a communication network, comprising
an ID obtainer (410) configured to obtain identification information for identifying at least one of a user and a user terminal;
a determiner (420) configured to determine at least one device parameter using said identification information, which parameter is associated with a device selected to receive media data of said media service; and
a policy selector (430) configured to select according to said at least one device parameter a policy which is to be applied for said media service,
wherein said at least one device parameter represents a device type for identification information identifying a user terminal,
wherein a rule associated with said policy is provided to another node (120, 140, 160) to be installed at said other node so as to enforce said policy at said other node for a service session and/or to provide for charging and reporting at said other node, and
wherein the at least one device parameter is provided to said other node (120, 140, 160) in a Device-Type Attribute Value Pair.

10. Node of claim 9, further comprising a rule provider configured to provide a rule associated with said policy to another node to be installed at said other node so as to enforce said policy at said other node and/or to provide for charging and reporting at said other node.

11. System comprising the node of claim 9 or 10, as well as another node (550) having a rule receiver (530) configured to receive a rule associated with said policy, and
a policy enforcer (540) configured to enforce said policy at said other node.

12. System of claim 11, wherein said other node (550) further comprises
a request obtainer (510) configured to receive a request of a user terminal including identification information, and
a forwarder (520) configured to forward said identification information to said ID obtainer (410) of said node.

13. Computer program including instructions configured, when executed on a data processor, to cause the data processor to carry out the method of one of claims 1 to 8.

## Patentansprüche

1. Ein Verfahren eines Steuerns von Ressourcen für einen Medienservice in einem Policy-and-Charging-System eines Kommunikationsnetzes, umfassend die Schritte
Erhalten, bei einem Netzknoten (110), von Identifikationsinformation zum Identifizieren mindestens eines Benutzers und eines Benutzerendgeräts;
Bestimmen von mindestens einem Geräteparameter unter Verwendung der Identifikationsinformation, wobei der Parameter im Zusammenhang steht mit einem Gerät, das ausgewählt wird zum Empfangen von Mediendaten des Medienservers; und
Auswählen eines Regelwerks gemäß dem mindestens einen Geräteparameter, das anzuwenden ist für den Medienservice,
wobei der mindestens eine Geräteparameter einen Gerätetyp für Identifikationsinformation, die ein Benutzerendgerät identifiziert, repräsentiert, und wobei das Verfahren ferner den Schritt eines Bereitstellens einer Regel umfasst, die im Zusammenhang steht mit dem Regelwerk, an einen anderen Knoten (120, 140, 160), die an dem anderen Knoten zu installieren ist, sodass das Regelwerk bei dem anderen Knoten für eine Servicesession durchgesetzt wird und/oder um ein Berechnen und Berichten an dem anderen Knoten zu ermöglichen, sowie den Schritt eines Bereitstellens des mindestens einen Geräteparameters an den anderen Knoten (120, 140, 160) in einem Gerätetyp-Attribut-Wert-Paar.

2. Verfahren nach Anspruch 1, wobei der Schritt eines Bestimmens des mindestens einen Geräteparameters ein Abrufen des mindestens einen Geräteparameters von einer Datenbank (150), basierend auf der Identifikationsinformation umfasst.

3. Verfahren nach Anspruch 1, wobei das Regelwerk ausgewählt wird abhängig von sowohl dem Gerätetyp, repräsentiert durch einen ersten Geräteparameter, als auch einem Teilnehmerpaket für Identifikationsinformation, die einen Benutzer identifiziert, der repräsentiert wird durch einen zweiten Geräteparameter.

4. Verfahren nach einem der Ansprüche 1 bis 3, wobei das ausgewählte Regelwerk die Auswahl eines spezifischen Codec für eine Serviceinstanz ermöglicht, sodass eine Umcodierung von einem Medienformat, das durch eine Knoten verwendet wird, zu einem anderen Medienformat, das durch das Gerät zu verwenden ist, ermöglicht wird.

5. Verfahren nach einem der Ansprüche 1 bis 4, wobei das ausgewählte Regelwerk eine Zugangsteuerung ermöglicht, um eine Anzahl von Serviceinstanzen, die einzurichten sind, abhängig von dem mindestens einen Geräteparameter, zu erlauben.

6. Verfahren nach einem der Ansprüche 1 bis 5, wobei das ausgewählte Regelwerk eine Bandbreitenanpassung für die erste Serviceinstanz oder zusätzliche Serviceinstanzen, abhängig von dem mindestens einen Geräteparameter, ermöglicht.

7. Verfahren nach einem der Ansprüche 1 bis 6, wobei das Gerät ein Benutzerendgerät ist, insbesondere ein Mobiltelefon des Benutzers oder ein Medienwiedergabegerät verbindbar mit dem Benutzerendgerät.

8. Verfahren nach einem der Ansprüche 1 bis 7, wobei der Knoten eine Policy-and-Charging-Rules-Funktion, PCRF, umfasst, und/oder der andere Knoten eine Anwendungsfunktion oder Verkehrsdetektionsfunktion umfasst.

9. Knoten zum Steuern von Ressourcen für einen Medienservice in einem Policy-and-Charging-System eines Kommunikationsnetzes, umfassend
einen ID-Erhalter (410), konfiguriert zum Erhalten von Identifikationsinformation zum Identifizieren mindestens eines von einem Benutzer und einem Benutzerendgerät;
einen Bestimmer (420) zum Bestimmen von mindestens einem Geräteparameter unter Verwendung der Identifikationsinformation, wobei der Parameter im Zusammenhang steht mit einem Gerät, ausgewählt zum Empfangen von Mediendaten des Medienservice; und
einem Regelwerkauswähler (430), konfiguriert zum Auswählen gemäß dem mindestens einen Geräteparameter eines Regelwerks, das anzuwenden ist für den Medienservice,
wobei der mindestens eine Geräteparameter einen Gerätetyp für Identifikationsinformation repräsentiert, die ein Benutzerendgerät identifiziert,
wobei eine Regel, die im Zusammenhang steht mit dem Regelwerk, bereitgestellt wird an einen anderen Knoten (120, 140, 160), um bei dem anderen Knoten installiert zu werden, sodass das Regelwerk bei dem anderen Knoten für eine Servicesession durchgesetzt wird, und/oder um Berechnen und Berichten bei dem anderen Knoten zu ermöglichten, und
wobei der mindestens eine Geräteparameter dem anderen Knoten (120, 140, 160) in einem Gerätetyp-Attribut-Wert-Paar bereitgestellt wird.

10. Knoten nach Anspruch 9, ferner umfassend einen Regelbereitsteller, der konfiguriert ist zum Bereitstellen einer Regel, die im Zusammenhang steht mit dem Regelwerk, an einen anderen Knoten, um installiert zu werden bei dem anderen Knoten, sodass das Regelwerk an dem anderen Knoten durchgesetzt wird und/oder um ein Berechnen und Berichten am anderen Knoten zu ermöglichen.

11. System, umfassend den Knoten nach Anspruch 9 oder 10, sowie einen anderen Knoten (550), aufweisend
einen Regelempfänger (530), konfiguriert zum Empfangen einer Regel, die im Zusammenhang steht mit dem Regelwerk, und
einen Regelwerkdurchsetzer (540), konfiguriert zum Durchsetzen des Regelwerks an dem anderen Knoten.

12. System nach Anspruch 11, wobei der andere Knoten (550) ferner umfasst
einen Anforderungs-Erhalter (510), konfiguriert zum Empfangen einer Anforderung eines Benutzergeräts enthalten in der Identifikationsinformation, und einen Weiterleiter (520), konfiguriert zum Weiterleiten der Identifikationsinformation an den ID-Erhalter (410) des Knotens.

13. Computerprogramm enthaltend Instruktionen, konfiguriert, wenn ausgeführt auf einem Datenprozessor, den Datenprozessor dazu zu bringen, das Verfahren nach einem der Ansprüche 1 bis 8 auszuführen.

## Revendications

1. Procédé de commande de ressources d'un service multimédia dans un système de politique et de facturation d'un réseau de communication, comprenant les étapes consistant à :
obtenir, au niveau d'un noeud de réseau (110), des informations d'identification permettant d'identifier au moins l'un d'un utilisateur et d'un terminal utilisateur ;
déterminer au moins un paramètre de dispositif au moyen desdites informations d'identification, lequel paramètre est associé à un dispositif sélectionné pour recevoir des données multimédia dudit service multimédia ; et
sélectionner, conformément audit au moins un paramètre de dispositif, une politique devant être appliquée pour ledit service multimédia,
dans lequel ledit au moins un paramètre de dispositif représente un type de dispositif destiné à des informations d'identification identifiant un terminal utilisateur, et
le procédé comprenant en outre l'étape consistant à fournir à un autre noeud (120, 140, 160) une règle associée à ladite politique devant être installée au niveau dudit autre noeud afin de mettre en application ladite politique au niveau dudit autre noeud pour une session de service et/ou pour assurer la facturation et l'établissement de rapport au niveau dudit autre noeud, et l'étape consistant à
fournir l'au moins un paramètre de dispositif audit autre noeud (120, 140, 160) dans une Paire de Valeurs d'Attributs de Type de Dispositif.

2. Procédé selon la revendication 1, dans lequel l'étape consistant à déterminer ledit au moins paramètre de dispositif consiste à extraire d'une base de données (150), sur la base desdites informations d'identification, ledit au moins paramètre de dispositif.

3. Procédé selon la revendication 1, dans lequel ladite politique est sélectionnée à la fois en fonction dudit type de dispositif représenté par un premier paramètre de dispositif et d'un forfait d'abonné pour des informations d'identification identifiant un utilisateur représenté par un second paramètre de dispositif.

4. Procédé selon l'une quelconque des revendications 1 à 3, dans lequel ladite politique sélectionnée assure la sélection d'un codec spécifique pour une instance de service de manière à permettre le transcodage d'un format multimédia utilisé par un noeud en un autre format multimédia devant être utilisé par ledit dispositif.

5. Procédé selon l'une quelconque des revendications 1 à 4, dans lequel ladite politique sélectionnée assure la commande d'accès pour permettre l'établissement d'un certain nombre d'instances de services en fonction dudit au moins un paramètre de dispositif.

6. Procédé selon l'une quelconque des revendications 1 à 5, dans lequel ladite politique sélectionnée assure l'adaptation de la largeur de bande pour la première instance de service ou des instances de services supplémentaires en fonction dudit au moins un paramètre de dispositif.

7. Procédé selon l'une quelconque des revendications 1 à 6, dans lequel ledit dispositif est un terminal utilisateur, notamment un téléphone mobile, de l'utilisateur, ou un dispositif de reproduction multimédia pouvant être connecté au terminal utilisateur.

8. Procédé selon l'une quelconque des revendications 1 à 7, dans lequel ledit noeud comprend une fonction de règles de politique et de facturation, PCRF (Policy and Charging Rules Function), et/ou ledit autre noeud comprend une fonction d'application ou une fonction de détection de trafic.

9. Noeud destiné à commander des ressources pour un service multimédia dans un système de politique et de facturation d'un réseau de communication, comprenant :
un dispositif d'obtention d'ID (410), configuré pour obtenir des informations d'identification permettant d'identifier au moins l'un d'un utilisateur et d'un terminal utilisateur ;
un dispositif de détermination (420), configuré pour déterminer au moins un paramètre de dispositif au moyen desdites informations d'identification, lequel paramètre est associé à un dispositif sélectionné pour recevoir des données multimédia dudit service multimédia ; et
un sélecteur de politique (430) configuré pour sélectionner, conformément audit au moins un paramètre de dispositif, une politique devant être appliquée pour ledit service multimédia,
dans lequel ledit au moins un paramètre de dispositif représente un type de dispositif pour des informations d'identification identifiant un terminal utilisateur,
dans lequel une règle associée à ladite politique est fournie à un autre noeud (120, 140, 160) afin qu'elle soit installée au niveau dudit autre noeud de manière à mettre en application ladite politique au niveau dudit autre noeud pour une session de service et/ou pour assurer la facturation et l'établissement de rapport au niveau dudit autre noeud, et
dans lequel l'au moins un paramètre de dispositif est fourni audit autre noeud (120, 140, 160) dans une Paire de Valeurs d'Attributs de Type de Dispositif.

10. Noeud selon la revendication 9, comprenant en outre un dispositif de fourniture de règle configuré pour fournir une règle associée à ladite politique afin qu'elle soit installée au niveau dudit autre noeud de façon à mettre en application ladite politique au niveau dudit autre noeud, et/ou pour assurer la facturation et l'établissement de rapport au niveau dudit autre noeud.

11. Système comprenant le noeud selon la revendication 9 ou 10, ainsi qu'un autre noeud (550) comportant un récepteur de règle (530) configuré pour recevoir une règle associée à ladite politique, et
un dispositif de mise en application de politique (540), configuré pour mettre en application ladite politique au niveau dudit autre noeud.

12. Système selon la revendication 11, dans lequel ledit autre noeud (550) comprend en outre
un dispositif d'obtention de demande (510), configuré pour recevoir une demande d'un terminal utilisateur contenant des informations d'identification, et
un dispositif de réacheminement (520), configuré pour réacheminer lesdites informations d'identification vers ledit dispositif d'obtention d'ID (410) dudit noeud.

13. Programme informatique comprenant des instructions configurées, lorsqu'elles sont exécutées sur un processeur de données, pour faire en sorte que le processeur de données mette en oeuvre le procédé selon l'une des revendications 1 à 8.
